# DEMANDE DE BREVET EUROPEEN

(11) **EP 2 258 959 A1**
(43) Date de publication de la demande: **08.12.2010**
(21) Numéro de dépôt: 10290257.4
(22) Date de dépôt: 14.05.2010
(51) Int. Cl.: F16D 43/14, F16H 33/08, F16H 33/14

(54) **Appareil de transmission mécanique à variation continue et automatique du rapport de transmission**

(30) Priorité: 14.05.2009 FR 0902328
(71) Demandeur: Guichard, Louis, 21000 Dijon (FR)
(72) Inventeur: Guichard, Louis, 21000 Dijon (FR)
(74) Mandataire: Oudin, Stéphane

(57) **Abrégé**

L'invention a pour objet une unité de transmission mécanique automatique à variation continue de la vitesse de rotation et du couple d'un arbre menant (4) vers un récepteur rotatif mené (9, 9'). Chaque unité comporte une pluralité d'organes de liaison (1) montés chacun à rotation sur un pivot (2) entraîné autour de l'axe de l'arbre (4). Chaque organe de liaison est mécaniquement lié à un élément de guidage (6a, 6b, 6c) qui coopère avec un chemin de guidage (7, 8) porté par le récepteur. Chaque élément de guidage (6a, 6b, 6c) est directement lié à un organe de liaison (1) par un doigt (5) permettant une libre rotation par rapport à l'organe de liaison

## Description

La présente invention concerne un appareil de transmission mécanique entre un arbre menant et un arbre mené, la transmission s'effectuant de façon automatique avec une variation continue du rapport des vitesses et des couples entre l'arbre menant et l'arbre mené. Une telle unité d'appareil variateur automatique trouve notamment une application dans le domaine automobile.

Dans le brevet européen EP 0 172 557, on a déjà décrit un appareil de ce type. Un tel appareil de l'état de la technique comporte un arbre menant et un arbre mené coaxiaux, un plateau menant entrainé par l'arbre menant, un plateau mené solidaire de l'arbre mené et portant une piste circulaire continue excentrée par rapport à l'axe commun des arbres menant et mené, des galets qui roulent à l'intérieur de ladite piste circulaire, chacun de ces galets étant portés par une biellette articulée autour d'un axe d'articulation sur le plateau menant, les articulations de toutes les biellettes étant uniformément réparties sur un cercle, dont le centre se trouve sur l'axe commun des deux arbres coaxiaux. Les appareils de ce type présentent, cependant, de nombreux inconvénients : au cours du roulement des galets sur la piste, dans un certain nombre de situations en fonction des forces centrifuges développées, les galets quittent la piste de roulement, retombent sur l'arbre menant et ensuite, sont rejetés contre la piste. Il s'en suit des chocs répétés qui endommagent les organes de l'appareil. Les galets ne sont pas assez lourds pour fournir des forces centrifuges assez puissantes et l'excentricité entre l'axe menant et l'axe de la piste circulaire est trop réduite pour conférer à l'appareil une efficacité importante.

On a donc proposé, dans le brevet européen EP 0 399 888 un perfectionnement permettant d'éviter les inconvénients du dispositif antérieur. Pour ce faire, on a proposé un appareil du type faisant appel à des forces centrifuges, cet appareil comportant un arbre menant et un arbre mené coaxiaux, un moyen menant entrainé par l'arbre menant, au moins un plateau mené solidaire de l'arbre mené et portant au moins une piste circulaire continue, excentrée par rapport à l'axe commun des arbres menant et mené, des galets qui roulent à l'intérieur de la piste circulaire, chacun de ces galets étant porté par une biellette entrainée de façon articulée par le moyeu menant, tous les axes d'articulation sur le moyeu menant étant uniformément répartis sur un cercle, dont le centre se trouve sur l'axe commun des deux arbres menant et mené ; le perfectionnement apporté à l'état de la technique consistait dans le fait que chaque biellette portant un galet était articulée sur la partie externe d'une masselotte, qui est elle-même articulée sur le moyeu solidaire de l'arbre menant, chaque masselotte étant alourdie dans sa partie externe la plus éloignée de son articulation sur le moyeu menant. Comme il vient d'être indiqué, ce brevet de l'état de la technique requiert la mise en oeuvre de galets, de masselottes et de biellettes interposées entre chaque galet et sa masselotte associée ; il est, en outre, prévu d'interposer un ressort entre chaque biellette et sa masselotte de façon à les écarter l'une de l'autre pour pousser le galet contre sa piste de roulement.

Cette disposition entraine une relative complexité de l'appareil, d'où il résulte un coût élevé. Par ailleurs, au cours du roulement des galets sur leur piste circulaire, il peut encore arriver, dans certains cas de fonctionnement, par exemple au démarrage ou aux vitesses de rotation lentes, que le contact des galets avec leur piste soit perdu ; en outre, pour éviter que les galets subissent des rotations continues et rapides à l'intérieur de leur piste circulaire, il avait été nécessaire d'envisager la présence d'un coussinet entre la piste circulaire et son axe, ce qui correspondait à une augmentation du coût. En d'autres termes, la présence des galets rotatifs générait des inconvénients tant sur le plan du prix que sur le plan de la fiabilité car il était nécessaire, pour assurer leur maintien contre leur piste d'appui la plus externe, de prévoir une articulation entre chaque biellette et sa masselotte.

La présente invention a pour but de palier les inconvénients susmentionnés. Dans l'appareil du brevet EP 0399888, chaque galet constitue un élément de guidage sur une piste circulaire ; cet élément de guidage doit être entrainé par un organe de liaison (à savoir une masselotte) mis en rotation autour de l'axe de l'arbre menant auquel il est lié à pivotement. Selon l'invention, on a lié directement à pivotement l'organe de liaison et l'élément de guidage ; l'organe de liaison astreint directement l'élément de guidage à transmettre le mouvement mené.

La présente invention a, en conséquence, pour objet un appareil constitué d'au moins une unité de transmission mécanique automatique à variation continue de la vitesse de rotation et du couple d'un arbre menant vers un récepteur rotatif mené, l'arbre menant et le récepteur mené étant coaxiaux, chaque unité comportant une pluralité d'organe de liaison montés chacun à rotation sur un pivot, qui est entrainé par l'arbre menant en rotation autour de l'axe de ce dernier, chaque organe de liaison étant également mécaniquement lié à un élément de guidage, qui coopère avec un chemin de guidage porté par le récepteur rotatif mené, ledit chemin de guidage étant circulaire et ayant un axe parallèle à l'axe de l'arbre menant mais décalé par rapport à ce dernier, remarquable en ce que chaque élément de guidage est directement lié à un organe de liaison par un doigt permettant une libre rotation relative de l'élément de guidage par rapport à l'organe de liaison.

Selon la présente invention, l'élément de guidage est directement lié à l'organe de liaison par un doigt permettant une libre rotation relative dudit organe de liaison par rapport à l'élément de guidage. Cette liaison directe permet de s'affranchir de la présence d'une biellette interposée entre l'organe de liaison et l'élément de guidage, comme c'était le cas pour la réalisation décrite dans le brevet EP 0 399 888.

Dans un mode préféré de réalisation, pour chaque unité, l'élément de guidage est un patin constitué d'un secteur de couronne, qui peut glisser entre deux pistes cylindriques circulaires coaxiales, dont l'axe commun est décalé par rapport à l'axe de l'arbre menant, lesdites pistes étant ménagées sur le récepteur rotatif mené. On peut prévoir que, pour chaque unité, le récepteur rotatif mené constitue un plateau, qui porte en relief les deux pistes cylindriques définissant entre elles le chemin de guidage. Avantageusement, l'appareil selon l'invention comporte, pour chaque unité, trois organes de liaison, les trois pivots qui leur sont associés ayant leurs axes parallèles et disposés à 120° l'un de l'autre autour de l'axe de l'arbre menant. On peut prévoir que, pour chaque unité, l'arbre menant entraine un plateau coaxial sur lequel, perpendiculairement, viennent se fixer les pivots des organes de liaison. Lorsque l'on veut améliorer le fonctionnement de l'appareil selon l'invention, on utilise un ensemble de deux unités identiques associées au même arbre menant, ce qui permet d'augmenter les couples transmis et d'améliorer la régularité de la transmission. Dans ce cas, on prévoit que les deux unités sont disposées symétriquement par rapport au plateau menant qui porte les pivots des organes de liaison.

Avantageusement, l'axe des pistes, qui délimitent le chemin de guidage circulaire d'une unité, est symétrique de l'axe analogue de l'autre unité par rapport à l'axe menant de l'ensemble ; les récepteurs rotatifs menés des deux unités de l'appareil peuvent être liés entre eux par des pièces en forme de U ou par des barres fixées par leurs extrémités aux deux récepteurs. Pour stabiliser la plage de variation sur le rapport de vitesse 1/1, on peut, de préférence, dans le cas où l'on utilise deux unités comportant des éléments de guidage constitués de patins en forme de secteurs de couronne, prévoir que l'un des patins s'étend sur un angle de secteur de couronne plus important que les autres patins, les deux patins alourdis étant disposés de façon à être, pour les deux unités, diamétralement opposés par rapport à l'axe de l'arbre menant.

Si l'on veut augmenter l'effet des forces centrifuges, pour chaque unité de l'appareil selon l'invention, chaque organe de liaison peut avoir une partie éloignée de son pivot plus importante que sa partie à proximité dudit pivot et constitue ainsi une masselotte. Mais chaque organe de liaison peut également être une simple biellette, dont la fonction est uniquement de maintenir une distance fixe entre le doigt et le pivot associés à l'organe de liaison.

Pour mieux faire comprendre l'objet de l'invention, on va en décrire maintenant, à titre d'exemple purement illustratif et non limitatif, un mode de réalisation représenté sur le dessin annexé.

Sur ce dessin :
- la figure 1 représente une coupe transversale selon B ; B' de la figure 2 ;
- la figure 2 représente une coupe longitudinale selon l'axe de l'arbre menant de l'appareil ;
- la figure 3 représente un schéma partiel des éléments de l'une des unités de l'appareil représenté sur la figure 2, ce schéma figurant douze positions successives d'un pivot d'organe de liaison et du doigt, qui le lie à l'élément de guidage.

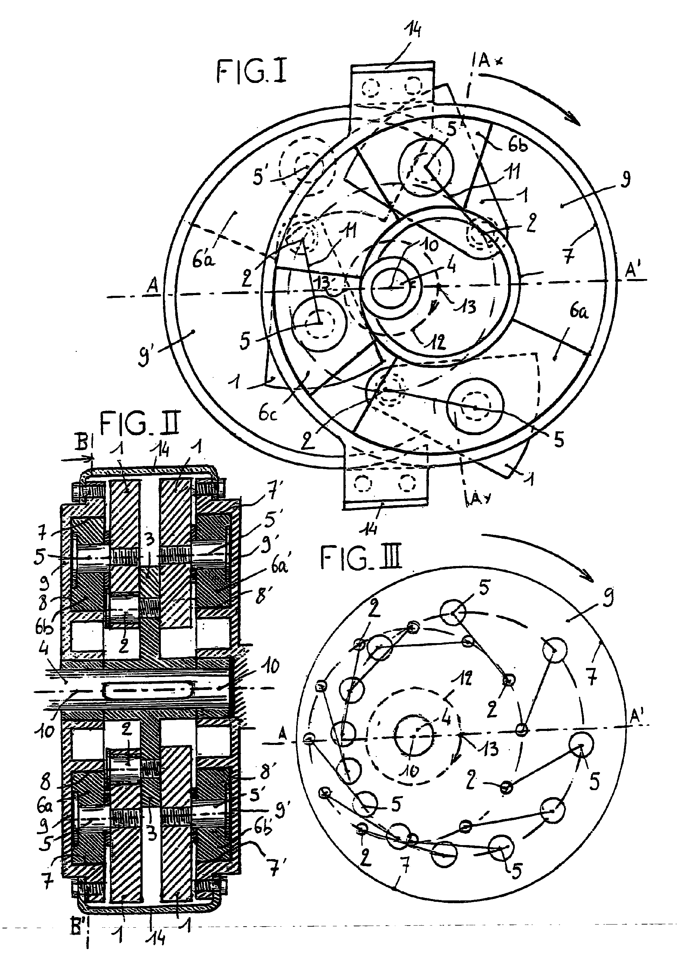

En se référant au dessin, on voit que les figures 1 et 2 représentent un mode de réalisation de l'appareil selon l'invention comportant deux unités de transmission mécanique identiques l'une à l'autre. La figure 1 est une coupe qui fait apparaître tous les éléments internes de la première unité constituant l'appareil alors que la deuxième unité qui apparaît sur la partie gauche de la figure est simplement vue en plan.

L'entrée du mouvement dans l'appareil s'effectue par l'arbre menant 4, dont l'axe a été désigné par 10. L'arbre 4 tourne dans le sens indiqué par la flèche sur les figures 1 et 3 : il est solidaire d'un plateau circulaire 3 perpendiculaire à l'axe 10.

Le mouvement rotatif de l'arbre 4 est transmis par l'appareil en direction du récepteur rotatif mené 9, 9'. Les deux unités identiques de l'appareil sont disposées symétriquement par rapport au plateau 3. Les chiffres de référence concernant l'unité représentée sur la droite de la figure 2 et sur la gauche de la figure 1 sont les mêmes que ceux utilisés pour l'autre unité de l'appareil à cette différence près qu'ils sont affectés du signe « ' » (par exemple, récepteur rotatif 9 pour l'unité de droite sur la figure 1 et 9' pour l'unité de gauche sur la même figure 1). Les récepteurs des deux unités ont une forme générale circulaire dont les axes 13 et 13' sont parallèles à l'axe 10 et disposés symétriquement par rapport audit axe 10. L'arbre menant 4 tourillonne dans des alésages ménagés dans les récepteurs des deux unités, de sorte que les deux récepteurs 9 et 9' tournent autour de l'axe 10 de l'arbre 4.

Chaque unité de l'appareil représenté sur le dessin comporte trois masselottes 1 articulées sur des pivots 2 portés par le plateau circulaire 3 : les pivots 2 sont tous à la même distance de l'axe 10 et ils sont espacés l'un de l'autre de 120°. Chaque masselotte 1 porte un doigt 5 autour duquel peut tourillonner un patin 6. Les patins 6 ont la forme d'un segment de couronne destiné à glisser entre deux pistes circulaires cylindriques coaxiales 7 et 8 aménagées sur le récepteur 9 de l'unité correspondante. L'axe 13 des pistes 7 et 8 est excentré par rapport à l'axe 10 et, comme il a déjà été indiqué, l'axe 13' de l'autre unité est symétrique de l'axe 13 par rapport à l'axe 10.

Sur la figure 1, on a matérialisé le rayon 11 joignant l'axe d'un pivot 2 et celui d'un doigt 5. Sur la figure 1 on a également matérialisé un grand diamètre AA', qui passe par les traces des axes 10 et 13 et délimite, sur les pistes de glissement 7 et 8, deux demi-pistes : l'une, de A vers A' dans le sens de rotation défini par la flèche, dit « positif », dans laquelle les patins 6 glissent dans le sens de la flèche, et l'autre, de A' vers A, où des poussées centrifuges s'exercent sur les surfaces de contact des demi-pistes. Sous l'action des forces centrifuges, l'axe 13 des pistes 7, 8 est poussé sur une trajectoire circulaire 12 autour de l'axe 10 dans le sens de la flèche (poussée positive), cette poussée s'effectuant par les patins 6 qui vont de A' vers A et poussés dans le sens contraire (poussée négative) par les patins qui vont de A vers A'. La figure 3 représente douze positions régulièrement espacées des pivots 2 des masselottes 1 et les positions qui en résultent pour les doigts 5 des patins 6.

La figure 3 permet de mieux comprendre le fonctionnement : pour une rotation positive de l'arbre 4, quand les patins 6 commencent à tourner entre les pistes 7 et 8, ils subissent une accélération lorsqu'ils se déplacent de A vers A' et inversement une décélération lorsqu'ils se déplacent de A' vers A ; d'autre part, le nombre de doigts 5 exerçant des poussées sur les demi-pistes « positives » allant de A' vers A est nettement supérieur au nombre de doigts 5 agissant dans les demi-pistes« négatives » de A vers A' ; et, par conséquent, la poussée au niveau de l'axe 13 est globalement continuellement positive de même que sur le récepteur 9 qui est solidaire des pistes. On remarque encore que, pendant la période de démarrage de l'appareil, l'accélération des masselottes 1 et des patins 6 de A vers A' est produite par l'arbre menant 4 qui exerce ainsi une traction sur le rayon 11 dirigée vers la zone centrale de l'appareil et qui diminue la poussée centrifuge « négative »du patin concerné. La décélération des patins 6 de A' vers A (sens de la flèche de la figure 1) s'accompagne d'une contre-poussée vers l'extérieur sur les rayons 11 des deux autres patins, qui augmentent leurs poussées centrifuges positives.

Pour ces différentes raisons, les couples globalement positifs transmis au récepteur 9, qui varient en fonction du carré du régime imposé moteur, assurent la variation automatique des rapports de transmission entre l'arbre menant 4 et le récepteur 9 depuis le démarrage et la vitesse nulle de sortie jusqu'au rapport 1/1 dit de « prise directe » sans avoir à utiliser un dispositif d'embrayage à friction ou de couplage hydraulique.

Toutefois, pour que l'appareil donne entière satisfaction, il est souvent nécessaire que la « prise directe » soit stabilisée. Dans ce but, l'invention prévoit d'alourdir l'un 6a des trois patins 6 en lui réservant un plus grand segment de couronne qu'aux deux autres, désignés par 6b et 6c. En fonction des couples variables nécessaires pour le récepteur 9, le doigt 5 de ce patin alourdi 6a se positionnera soit entre la ligne Ax (voir figure 1) et A' si l'arbre 4 doit retenir le récepteur (couple négatif), soit sur A' si l'arbre 4 doit tourner sans rien entrainer, soit entre A' et Ay (voir figure 1) si l'arbre 4 produit un couple positif. La position Ay marque la limite des couples transmissibles pour le rapport 1/1. Tout dépassement de cette limite produit un abandon de ce rapport, une accélération instantanée du régime de l'arbre menant et le retour au fonctionnement en variation automatique précédemment expliqué.

Pour assurer l'équilibrage dynamique de l'appareil et doubler les couples transmis sur le récepteur, on prévoit d'utiliser sur le même arbre menant 4 deux unités comme cela est représenté sur les figures 1 et 2 du dessin. Ces unités sont strictement identiques l'une à l'autre et les éléments de l'une sont diamétralement opposés à ceux de l'autre par rapport à l'axe 10 de l'arbre menant 4.

Les patins 6 sont avantageusement constitués recouverts par un alliage antifriction et glissent avec un minimum de jeu entre les deux pistes circulaires 7 et 8. Il faut rappeler que la quasi-totalité des couples sont transmis par les patins 6 aux pistes circulaires 7 et 8 par les pressions centrifuges et en très faible partie seulement par le coefficient de glissement positif, qui peut être estimé de 0,01 à 0,02. Pour augmenter les couples transmissibles sans trop augmenter les diamètres de l'appareil, il est possible de monter deux appareils complets bout à bout sur un même arbre menant.

L'appareil selon l'invention permet une très large plage de variations automatiques des rapports de vitesse et des couples entre un arbre menant et un arbre mené depuis la vitesse nulle jusqu'au rapport 1/1. Le démarrage et les accélérations sont très progressifs, sans perte de rendement et sans faire appel à des embrayages à friction ou à des coupleurs hydrauliques. Les rendements sont très élevés sur toute la plage de variation ; le rendement est de cent pour cent pour le rapport 1/1. Comme précédemment indiqué, il y a une possibilité de stabilisation de la « prise directe » et il peut y avoir une retenue de l'élément moteur à la décélération.

L'appareil selon l'invention est simple et fiable ; son coût de fabrication est modéré et il convient à des applications tant dans le domaine automobile que dans le domaine de l'industrie en général.

## Revendications

1. Appareil constitué d'au moins une unité de transmission mécanique automatique à variation continue de la vitesse de rotation et du couple d'un arbre menant (4) vers un récepteur rotatif mené (9, 9'), l'arbre menant et le récepteur mené étant coaxiaux, chaque unité comportant une pluralité d'organes de liaison (1) montés chacun à rotation sur un pivot (2), qui est entrainé par l'arbre menant (4) en rotation autour de l'axe de ce dernier, chaque organe de liaison (1) étant également mécaniquement lié à un élément de guidage (6a, 6b, 6c) qui coopère avec un chemin de guidage (7, 8) porté par le récepteur rotatif mené (9, 9'), ledit chemin de guidage (7, 8) étant circulaire et ayant un axe (13, 13') parallèle à l'axe de l'arbre menant (4) mais décalé par rapport à ce dernier, **caractérisé en ce que** chaque élément de guidage (6a, 6b, 6c) est directement lié à un élément de guidage (1) par un doigt (5) permettant une libre rotation relative de l'élément de guidage (6) par rapport à l'élément de guidage (1).

2. Appareil selon la revendication 1, **caractérisé en ce que**, pour chaque unité, l'élément de guidage est un patin constitué d'un secteur de couronne (6a, 6b, 6c) qui peut glisser entre deux pistes cylindriques circulaires coaxiales (7, 8) dont l'axe commun est décalé par rapport à l'axe de l'arbre menant (4), lesdites pistes étant ménagées sur le récepteur rotatif mené (9, 9').

3. Appareil selon la revendication 2, **caractérisé en ce que**, pour chaque unité, le récepteur rotatif mené constitue un plateau (9, 9'), qui porte en relief les deux pistes cylindriques définissant entre elles le chemin de guidage.

4. Appareil selon l'une des revendications 1 à 3, **caractérisé en ce que**, pour chaque unité, il comporte trois éléments de guidage (1), les trois pivots (2) qui leur sont associés ayant leurs axes parallèles et disposés à 120° l'un de l'autre autour de l'axe de l'arbre menant (4).

5. Appareil selon l'une des revendications 1 à 4, **caractérisé en ce que**, pour chaque unité, l'arbre menant (4) entraine un plateau (3) coaxial sur lequel, perpendiculairement, viennent se fixer les pivots (2) des éléments de guidage (1).

6. Appareil selon la revendication 5, **caractérisé en ce qu'**il comporte un ensemble de deux unités identiques associées au même arbre menant (4), lesdites unités étant disposées symétriquement par rapport au plateau (3).

7. Appareil selon la revendication 6, **caractérisé en ce que** l'axe des pistes, qui délimitent le chemin de guidage circulaire (13) d'une unité, est symétrique de l'axe analogue (13') de l'autre unité par rapport à l'axe de l'arbre menant (4) de l'ensemble.

8. Appareil selon les revendications 6 ou 7, **caractérisé en ce que** les récepteurs rotatifs menés (9, 9') des deux unités de l'appareil sont liés entre eux par des pièces en forme de U (14) ou par des barres fixées par leurs extrémités aux deux récepteurs.

9. Appareil selon les revendications 2 et 7 prises simultanément, **caractérisé en ce que**, pour stabiliser la plage de variation sur le rapport de vitesses 1/1, l'un (6a, 6'a) des patins s'étend sur un angle de secteur de couronne plus important que les autres patins, les deux patins ainsi alourdis (6a, 6'a) étant disposés de façon à être, pour les deux unités, diamétralement opposés par rapport à l'axe de l'arbre menant (4).

10. Appareil selon l'une des revendications 1 à 9, **caractérisé en ce que**, pour chaque unité, chaque unité de liaison (1) a sa partie éloignée du pivot (2) plus importante que sa partie à proximité du pivot (2) et constitue une masselotte.

11. Appareil selon l'une des revendications 1 à 9, **caractérisé en ce que**, pour chaque unité, chaque unité de liaison (1) est une simple biellette.
